# EUROPEAN PATENT APPLICATION

(11) **EP 2 355 424 A1**
(43) Date of publication of application: **10.08.2011**
(21) Application number: 09830303.5
(22) Date of filing: 13.11.2009
(51) Int. Cl.: H04L 12/58, G06F 13/00, H04M 3/00, H04M 11/00

(54) **E-MAIL OPERATION SYSTEM, E-MAIL OPERATION DEVICE, AND E-MAIL OPERATION METHOD**

(30) Priority: 02.12.2008 JP 2008307635
(71) Applicant: NTT DOCOMO, INC., Chiyoda-ku Tokyo 100-6150 (JP)
(72) Inventor: TAKAHASHI Masaru, Tokyo 100-6150 (JP)
(74) Representative: Viering, Jentschura & Partner
(86) International application number: PCT/JP2009/069386
(87) International publication number: WO 2010/064536

(57) **Abstract**

An e-mail operation is performed on a communication terminal in which a communication carrier under contract is changed.

In an e-mail operation system (2), an e-mail operation requirement having as a destination a first mail address used by a target terminal (20) when communication with a first communication network (N1) is performed is received by a first e-mail control device (50) included in the first communication network (N1); in a first e-mail operation system (30) configured to include the first e-mail control device (50) and a SCP (40), the telephone number of the target terminal (20) that is in association with the first mail address is specified; the e-mail operation requirement is transmitted to a second communication network (N2) using this telephone number; in a second e-mail operation device (60), an e-mail operation instruction is provided to the target terminal (20) by using the telephone number that is required to be operated. Thus, the e-mail operation instruction is provided to the target terminal (20) through the second communication network (N2) different from the first communication network (N1).

## Description

### Technical Field

The present invention relates to an e-mail operation system, an e-mail operation device and an e-mail operation method.

### Background Art

Although e-mail is widely used as an asynchronous communication tool utilizing the Internet in telecommunication terminals such as a mobile telephone, it often happens that, for example, erroneous information is transmitted, and an e-mail is sent to a wrong destination address. Therefore, there have been examined various methods of transmitting, to a mail reception destination party, an operation requirement for deletion, replacement or the like and thus operating the mail received and stored in a mail server or a communication terminal of the destination party before the destination party reads it (see, for example, patent document 1).

### Citation List

### Patent Literature

Patent document 1: Japanese Unexamined Patent Application Publication No. 2002-55932

### Summary of Invention

### Technical Problem

Incidentally, in recent years, number portability has been introduced in which, even when a user of a communication terminal who has contracted with a communication carrier (previous communication carrier) supplying a certain communication network (previous communication network) changes the communication carrier to be contracted to a communication carrier (new communication carrier) supplying a communication network (new communication network) different from the previous communication network, the user can continue to use the telephone number acquired when the user has contracted with the previous communication carrier. Therefore, more and more users are changing the communication carriers with which they have contracted. However, since the number portability is not applied to mail addresses allocated to communication terminals, when a communication carrier contracted by the user changes from the previous communication carrier to the new communication carrier, the use of the mail address (previous mail address) allocated by the previous communication carrier to the communication terminal is stopped, and an mail address is newly allocated by a new communication carrier to the communication terminal. Then, information as to e-mails transmitted and received during the contract with the previous communication carrier is deleted from the mail server included in the previous network.

Here, it is assumed that, with respect to a communication terminal which changes a contract carrier from the previous communication carrier to a new communication carrier, the technology described above and disclosed in patent document 1 is used, the number portability is utilized and thus an operation requirement for deletion, replacement or the like of e-mails that has been transmitted to the previous mail address used in the communication terminal before the communication carrier has been changed and that are currently being held in a communication terminal is transmitted to the communication terminal. However, since, in the mail server of the previous communication carrier, as described above, the information as to e-mails transmitted and received by using the previous mail address the use of which has been stopped is deleted, in the mail server of the previous communication carrier, it is impossible to perform an operation of, for example, deleting the e-mails, or the like based on the operation requirement.

The present invention has been made in view of the foregoing problem; an object of the present invention is to provide an e-mail operation system, an e-mail operation device and an e-mail operation method which can perform an operation of an e-mail on a communication terminal in which a communication carrier under contract has been changed by using, for example, number portability.

### Solution to Problem

To achieve the above object, according to the one aspect of the present invention, there is provided an e-mail operation system including: a first e-mail operation device that is included in a first communication network and that operates an e-mail exchanged with a communication terminal which accesses the first communication network to perform communication; and a second e-mail operation device that is included in a second communication network different from the first communication network and that operates an e-mail exchanged with a communication terminal which accesses the second communication network to perform communication, in which the e-mail operation system operates, on a target terminal that is a communication terminal on which the operation is performed, through the second communication network, an e-mail transmitted using a first mail address used when the target terminal accesses the first communication network to exchange an e-mail, where the first e-mail operation device includes: terminal information storage means for storing the target terminal information used commonly in the first communication network and in the second communication network in order to specify the target terminal and the first mail address, in association with each other; e-mail operation requirement reception means for receiving the e-mail operation requirement including the first mail address and information for specifying the e-mail; target terminal information acquisition means for referencing the terminal information storage means based on the first mail address included in the e-mail operation requirement received by the operation requirement reception means and for acquiring the target terminal information that is stored in association with the first mail address; and e-mail operation requirement transmission means for transmitting, to the second communication network, the e-mail operation requirement including the target terminal information and the information for specifying the e-mail, and the second e-mail operation device includes: operation requirement reception means for receiving the operation requirement transmitted from the first e-mail operation device; and operation instruction transmission means for transmitting an e-mail operation instruction to operate an e-mail specified by the information for specifying the e-mail to the target terminal that is specified by the target terminal information included in the operation requirement transmitted by the operation requirement reception means.

The other aspect of the present invention is that an e-mail operation device included in the e-mail operation system according to the present invention is a first e-mail operation device included in the e-mail operation system including: a first e-mail operation device that is included in a first communication network and that operates an e-mail exchanged with a communication terminal which accesses the first communication network to perform communication; and a second e-mail operation device that is included in a second communication network different from the first communication network and that operates an e-mail exchanged with a communication terminal which accesses the second communication network to perform communication, in which the e-mail operation system operates, on a target terminal that is a communication terminal on which the operation is performed, through the second communication network, an e-mail transmitted using a first mail address used when the target terminal accesses the first communication network to exchange an e-mail. The first e-mail operation device includes: terminal information storage means for storing the target terminal information used commonly in the first communication network and in the second communication network in order to specify the target terminal and the first mail address, in association with each other; e-mail operation requirement reception means for receiving the e-mail operation requirement including the first mail address and information for specifying the e-mail; target terminal information acquisition means for referencing the terminal information storage means based on the first mail address included in the e-mail operation requirement received by the operation requirement reception means and for acquiring the target terminal information that is stored in association with the first mail address; and e-mail operation requirement transmission means for transmitting, to the second communication network, the e-mail operation requirement including the target terminal information and the information for specifying the e-mail.

The other aspect of the present invention is that an e-mail operation device included in the e-mail operation system according to the present invention is a second e-mail operation device included in the e-mail operation system including: a first e-mail operation device that is included in a first communication network and that operates an e-mail exchanged with a communication terminal which accesses the first communication network to perform communication; and a second e-mail operation device that is included in a second communication network different from the first communication network and that operates an e-mail exchanged with a communication terminal which accesses the second communication network to perform communication, in which the e-mail operation system operates, on a target terminal that is a communication terminal on which the operation is performed, through the second communication network, an e-mail transmitted using a first mail address used when the target terminal accesses the first communication network to exchange an e-mail. The second e-mail operation device includes: operation requirement reception means for receiving the operation requirement that is transmitted from the first e-mail operation device and that includes target terminal information used commonly in the first communication network and in the second communication network in order to specify the target terminal and information for specifying an e-mail; and operation instruction transmission means for transmitting an e-mail operation instruction to operate an e-mail specified by the information for specifying the e-mail to the target terminal that is specified by the target terminal information included in the operation requirement transmitted by the operation requirement reception means.

In the e-mail operation system and the e-mail operation device, based on the first mail address included in the e-mail operation requirement received by the e-mail operation requirement reception means of the first e-mail operation device, the target terminal information acquisition means references the terminal information storage means and thereby acquires the target terminal information. Then, the e-mail operation requirement is transmitted to the second communication network using the target terminal information. On the other hand, based on the operation requirement received by the operation requirement reception means, the second e-mail operation device accesses the second communication network and transmits the e-mail operation instruction to the target terminal specified by the target terminal information. As described above, according to the e-mail operation system and the e-mail operation device, it is possible to transmit the e-mail operation instruction to the target terminal through the second communication network different from the first communication network using the target terminal information used commonly in the first communication network and in the second communication network for specifying the target terminal.

The e-mail operation system according to the present invention can be configured such that the second communication network is composed of a plurality of communication networks, the terminal information storage means stores communication network information that is information for specifying a network accessed by the target terminal among the communication networks further in association with the first mail address, the target terminal information acquisition means references the terminal information storage means and acquires the target terminal information that is stored in association with the first mail address and the communication network information, and the e-mail operation requirement transmission means transmits the e-mail operation requirement including the target terminal information and the information for specifying the e-mail to the communication network specified by the communication network information among the communication networks included in the second communication network.

According to the above configuration, information related to communication networks that can access the target terminal among the communication networks included in the second communication network different from the first communication network is stored as communication network information in the terminal information storage means. Then, the e-mail operation requirement transmission means uses this communication network information to transmit the e-mail operation requirement to the communication network specified by the communication network information. As described above, even when there is a plurality of networks included in the second communication network, it is possible to transmit the e-mail operation requirement to the communication network that can access the target terminal based on the communication network information and to transmit the e-mail operation instruction to the target terminal through the communication network different from the first communication network.

The e-mail operation system according to the present invention may be configured such that the first e-mail operation device further includes: history information storage means for storing the information for specifying the e-mail transmitted to the first mail address and the information for specifying a transmitter of the e-mail, in association with each other, and the e-mail operation requirement reception means receives the e-mail operation requirement including the first mail address, the information for specifying the e-mail and the information for specifying a transmitter of the e-mail operation requirement, references the history information storage means based on the information for specifying the e-mail, determines whether or not the transmitter of the e-mail agrees with the transmitter of the e-mail operation requirement and stops processing related to the e-mail operation requirement when the transmitter of the e-mail does not agree with the transmitter of the e-mail operation requirement.

In the above configuration, when the transmitter of the e-mail operation requirement received by the e-mail operation requirement reception means of the first e-mail operation device does not agree with the transmitter of the e-mail stored in the history information storage means, the subsequent processing related to the e-mail operation requirement is stopped. Therefore, in the above configuration, for example, when the e-mail operation requirement is transmitted from a third party different from the transmitter of the e-mail, it is possible to prevent the e-mail operation from being performed based on the e-mail operation requirement.

The e-mail operation system according to the present invention can be configured such that the first e-mail operation device further includes: distribution information storage means for storing the information for specifying the e-mail transmitted to the first mail address and the information for specifying whether or not the e-mail is distributed to the communication terminal, in association with each other, and the e-mail operation requirement reception means references the distribution information storage means based on the information for specifying the e-mail, determines whether or not the e-mail is distributed to the target terminal and stops the processing related to the e-mail operation requirement when the e-mail is not distributed to the target terminal.

In the above configuration, the distribution information storage means stores the e-mail distribution information, the e-mail operation requirement reception means makes reference to determine whether or not the e-mail is distributed, and, when the e-mail is not distributed, the processing related to the e-mail operation requirement is stopped. Therefore, in the above configuration, since, when the e-mail is not distributed, the transmission of the e-mail operation instruction to the target terminal is stopped, it is possible to reduce the unnecessary communication.

As will be described below, the e-mail operation system and the e-mail operation device according to the present invention can be described as the invention of an e-mail operation method. These are different only in categories, and they are substantially the same invention and therefore have the same functions and effects.

According to the one aspects of the present invention, there is provided an e-mail operation method using an e-mail operation system including: a first e-mail operation device that is included in a first communication network and that operates an e-mail exchanged with a communication terminal which accesses the first communication network to perform communication; and a second e-mail operation device that is included in a second communication network different from the first communication network and that operates an e-mail exchanged with a communication terminal which accesses the second communication network to perform communication, in which the e-mail operation system operates, on a target terminal that is a communication terminal on which the operation is performed, through the second communication network, an e-mail transmitted using a first mail address used when the target terminal accesses the first communication network to exchange an e-mail. The e-mail operation method includes: a terminal information storage step of storing, in the first e-mail operation device, the target terminal information used commonly in the first communication network and in the second communication network in order to specify the target terminal and the first mail address, in association with each other; an e-mail operation requirement reception step of receiving, in the first e-mail operation device, the e-mail operation requirement including the first mail address and information for specifying the e-mail; a target terminal information acquisition step of referencing, in the first e-mail operation device, the terminal information storage means based on the first mail address included in the e-mail operation requirement received by the operation requirement reception means and of acquiring the target terminal information that is stored in association with the first mail address; an e-mail operation requirement transmission step of transmitting, in the first e-mail operation device, to the second communication network, the e-mail operation requirement including the target terminal information and the information for specifying the e-mail, an operation requirement reception step of receiving, in the second e-mail operation device, the operation requirement transmitted from the first e-mail operation device; and an operation instruction transmission step of transmitting, in the second e-mail operation device, an e-mail operation instruction to operate an e-mail specified by the information for specifying the e-mail to the target terminal that is specified by the target terminal information included in the operation requirement transmitted by the operation requirement reception means.

According to the one aspects of the present invention, there is provided an e-mail operation method using a first e-mail operation device included in an e-mail operation system including: a first e-mail operation device that is included in a first communication network and that operates an e-mail exchanged with a communication terminal which accesses the first communication network to perform communication; and a second e-mail operation device that is included in a second communication network different from the first communication network and that operates an e-mail exchanged with a communication terminal which accesses the second communication network to perform communication, in which the e-mail operation system operates, on a target terminal that is a communication terminal on which the operation is performed, through the second communication network, an e-mail transmitted using a first mail address used when the target terminal accesses the first communication network to exchange an e-mail. The e-mail operation method includes: a terminal information storage step of storing the target terminal information used commonly in the first communication network and in the second communication network in order to specify the target terminal and the first mail address, in association with each other; an e-mail operation requirement reception step of receiving the e-mail operation requirement including the first mail address and information for specifying the e-mail; a target terminal information acquisition step of referencing the terminal information storage means based on the first mail address included in the e-mail operation requirement received by the operation requirement reception means and of acquiring the target terminal information that is stored in association with the first mail address; and an e-mail operation requirement transmission step of transmitting to the second communication network, the e-mail operation requirement including the target terminal information and the information for specifying the e-mail.

According to the one aspects of the present invention, there is provided an e-mail operation method using a second e-mail operation device included in an e-mail operation system including: a first e-mail operation device that is included in a first communication network and that operates an e-mail exchanged with a communication terminal which accesses the first communication network to perform communication; and a second e-mail operation device that is included in a second communication network different from the first communication network and that operates an e-mail exchanged with a communication terminal which accesses the second communication network to perform communication, in which the e-mail operation system operates, on a target terminal that is a communication terminal on which the operation is performed, through the second communication network, an e-mail transmitted using a first mail address used when the target terminal accesses the first communication network to exchange an e-mail. The e-mail operation method includes: an operation requirement reception step of receiving the operation requirement transmitted from the first e-mail operation device; and an operation instruction transmission step of transmitting an e-mail operation instruction to operate an e-mail specified by the information for specifying the e-mail to the target terminal that is specified by the target terminal information included in the operation requirement transmitted by the operation requirement reception means.

### Advantageous Effects of Invention

According to the present invention, there are provided an e-mail operation system, an e-mail operation device and an e-mail operation method that can perform an operation of an e-mail on a communication terminal in which a communication carrier under contract has been changed using, for example, number portability.

### Brief Description of Drawings

[Fig. 1] A diagram showing the configuration of a communication system including an e-mail operation system according to a preferred embodiment of the present invention and its connection relationship;
[Fig. 2] A diagram showing the hardware configuration of a SCP, a first e-mail control device, a second e-mail operation device and a subscriber data base;
[Fig. 3] A diagram showing an example of information held in the SCP;
[Fig. 4] A diagram showing an example of information held in a history data base of the first e-mail control device;
[Fig. 5] A diagram showing an example of information held in the subscriber data base; and
[Fig. 6] A sequence diagram explaining an e-mail operation method in the communication system including the e-mail operation system according to the embodiment of the present invention.

### Description of Embodiments

The best embodiment of the present invention will be described in detail below with reference to the accompanying drawings.

### (Configuration of an e-mail operation system)

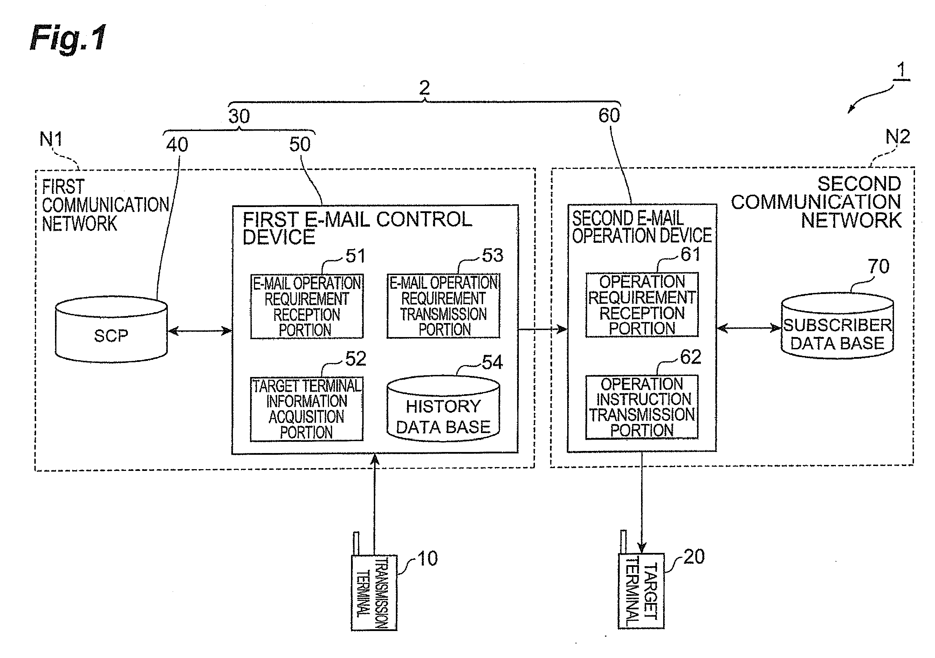

Fig. 1 is a diagram showing the configuration of a communication system 1 including an e-mail operation system according to a preferred embodiment of the present invention. The communication system 1 shown in Fig. 1 is configured to so as include: a transmission terminal 10 that is a communication terminal which is connected to a first communication network N1 to perform communication; a target terminal 20 that is a communication terminal which is connected to a second communication network N2 to perform communication; an e-mail operation system 2 that is a system which characterizes the present invention; and a subscriber data base 70. The e-mail operation system 2 is a system that operates, based on an e-mail operation requirement, e-mails which have already been distributed to communication terminals. This e-mail operation system 2 includes: a SCP 40 and a first e-mail control device 50 constituting a first e-mail operation system 30 that is a first e-mail operation device; and a second e-mail operation device 60 that is a second e-mail operation device. The first communication network N1 and the second communication network N2 are, for example, mobile communication networks, and each of them is a network which is supplied by a communication carrier so that communication terminals perform packet communication.

The transmission terminal 10 and the first e-mail control device 50 exchange information through the first communication network N1 by wireless communication. Furthermore, the target terminal 20 and the second e-mail operation device 60 exchange information through the second communication network N2 by wireless communication. Moreover, the first e-mail control device 50 is connected to the SCP 40 through a wired network; the first e-mail operation system 30 is connected to the second e-mail operation device 60 through a wired network; and the second e-mail operation device 60 is connected to the subscriber data base 70 through a wired network.

Although Fig. 1 only shows the first communication network N1 and the second communication network N2 as communication networks, a case where there is a plurality of communication networks different from the first communication network N1 will be described below in the present embodiment. Furthermore, although Fig. 1 shows that the transmission terminal 10, which is one communication terminal, is connected to the first e-mail control device 50, a plurality of communication terminals is actually connected thereto. Moreover, although Fig. 1 shows that the target terminal 20, which is one communication terminal, is connected to the second e-mail operation device 60, a plurality of communication terminals is actually connected thereto.

The individual devices included in the communication system 1 will now be described in detail. The transmission terminal 10 and the target terminal 20 are communication terminals that are used by the owner (user) of each of the communication terminals. Specifically, they are provided as devices such as a mobile telephone and a PDA (personal digital assistance) that have a communication feature. Furthermore, this communication terminal is formed with hardware such as a CPU (central processing unit), a memory, a monitor and a communication module. In order to connect the communication terminal to the first communication network N1 or the second communication network N2 to perform communication, the user of the communication terminal needs to contract with a communication carrier supplying the communication network, concerning the use of the communication network. That is, the user of the transmission terminal 10 contracts with a communication carrier supplying the first communication network N1, and thus the transmission terminal 10 included in the communication system 1 shown in Fig. 1 has the function of connecting to the first communication network N1. Furthermore, the user of the target terminal 20 contracts with a communication carrier supplying the second communication network N2, and thus the target terminal 20 has the function of connecting to the second communication network N2. Moreover, the users contract with the communication carriers, and thus mail addresses are allocated by the communication carries to the transmission terminal 10 and the target terminal 20. Although this mail address can be generally used while the user of the communication terminal contracts with the communication carrier that allocates the mail address, the use of the mail address is stopped after the user of the communication terminal has completed the contract with the communication carrier.

In the present embodiment, a case where the target terminal 20 changes the communication network accessed through MNP (mobile number portability) from the first communication network N1 to the second communication network N2 will be described below. The MNP refers to number portability on mobile telephones, with which the communication carriers under contract can be changed without telephone numbers being changed. Specifically, since the user of the target terminal 20 contracted with the communication carrier supplying the first communication network N1 in the past, a telephone number "09011111111" was provided as a telephone number for specifying the target terminal 20, the target terminal 20 was connected to the first communication network N1 to perform sound communication and the like, and e-mails were transmitted and received using a mail address (first mail address) "address1@xxxxx.ne.jp" allocated by the communication carrier supplying the first communication network N1. However, since the user of the target terminal 20 has changed the communication carrier to be contracted through the MNP, the communication network accessed by the target terminal 20 is changed from the first communication network N1 to the second communication network N2 without the telephone number "09011111111" for specifying the target terminal 20 being changed. As described above, when the communication carrier under contract is changed through the MNP, the telephone number "09011111111" is used for specifying the target terminal 20 both in the first communication network N1 and the second communication network N2. On the other hand, since the MNP is not applied to mail addresses, the change of the communication carrier to be contracted causes the use of the first mail address to be stopped in the exchange of e-mails by the target terminal 20, and a mail address (second mail address) allocated by the communication carrier supplying the second communication network N2, that is, "addressx@yyyyy.ne.jp" is used. Furthermore, since the use of the first mail address is stopped, in the mail server of the first communication network N1, a mail box holding e-mails exchanged through the use of the first mail address is deleted.

In the present embodiment, a case where an e-mail is operated which is transmitted by the specification of the first mail address by the transmission terminal 10 to the target terminal 20 which has changed, as described above, the communication network accessed through the MNP from the first communication network N1 to the second communication network N2, and which is stored in the target terminal 20 will be described. That is, the e-mail to be operated is transmitted from the transmission terminal 10 to the target terminal 20 when the communication network accessed by the target terminal 20 is the first communication network N1, and is received by the target terminal 20.

In the present embodiment, an e-mail operation requirement for the e-mail previously transmitted to the target terminal 20 is transmitted by the operation of the transmission terminal 10 by the user from the transmission terminal 10 to the first e-mail control device 50 included in the first e-mail operation system 30. Here, the e-mail operation requirement transmitted by the transmission terminal 10 to the first e-mail operation system 30 includes, for example, the deletion of the e-mail, the change or deletion of text included in the e-mail and replacement of a file attached to the e-mail. When the file attached to the e-mail is required to be replaced by the e-mail operation requirement, a replaced file is transmitted along with the e-mail operation requirement. This e-mail operation requirement includes the first mail address of the target terminal 20, information for specifying the e-mail and information for specifying a transmitter who performs the e-mail operation requirement. The information for specifying the e-mail includes, for example, information for specifying a sender (such as a mail address of the transmission terminal 10 that is the sender), information for specifying the transmitter (such as a mail address of the target terminal 20 that is the transmitter), the date and time when the e-mail is transmitted from the transmission terminal 10, and the like. Furthermore, when an e-mail exchanged between communication terminals previously includes an identifier or the like for specifying the e-mail, the identifier can be used as the information for specifying the e-mail. Moreover, the information for specifying the transmitter includes, for example, the mail address of the transmission terminal 10. In addition, the telephone number of the transmission terminal 10 can be used as the information for specifying the transmitter.

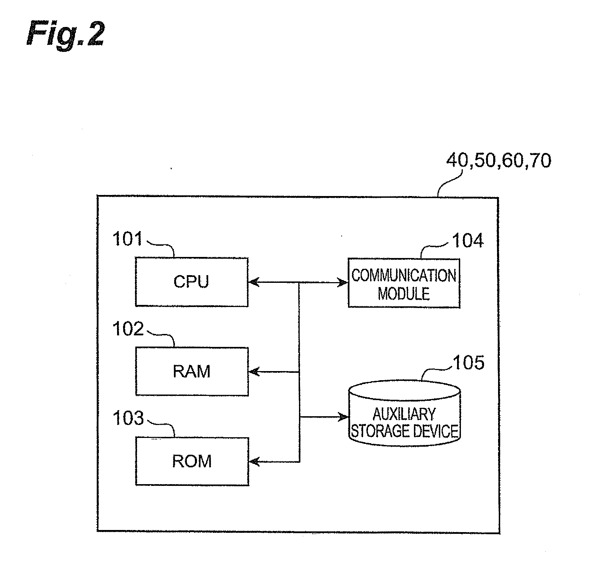

The first e-mail operation system 30 and the second e-mail operation device 60 are a system and a device that are included in the e-mail operation system 2 which characterizes the present invention. The first e-mail operation system 30 is included in the first communication network N1, and is configured so as to include the SCP 40 and the first e-mail control device 50. Furthermore, the second e-mail operation device 60 is a device that is included in the second communication network N2. Moreover, the subscriber data base 70 is included in the second communication network N2, and is a device in which information used when an e-mail operation instruction is transmitted in the second e-mail operation device 60 to the target terminal 20 is stored. As shown in Fig. 2, each of the SCP 40, the first e-mail control device 50, the second e-mail operation device 60, the subscriber data base 70 is formed with a computer including hardware such as a CPU 101, a RAM (random access memory) 102 and a ROM (read only memory) 103 that constitute a main storage device, a communication module 104 for performing communication and an auxiliary storage device 105 such as a hard disk. These components are operated, and thus the functions of the individual devices are achieved.

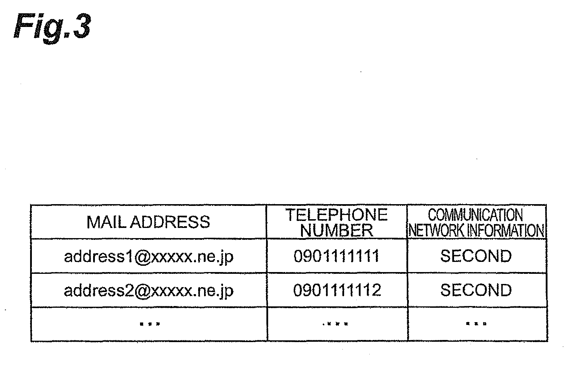

With reference back to Fig. 1, the functions of the individual devices included in the e-mail operation system 2 will be described. The SCP (service control point) 40 is included in the first e-mail operation system 30, and is a device that provides service related to a communication terminal which connects to the first communication network N1 to perform communication. Specifically, for example, information as to a communication terminal that changes the communication network accessed through the MNP from the first communication network N1 to a different communication network is stored in the SCP 40, and, when a call connection requirement for the communication terminal is performed, the SCP 40 has the function of providing information that the communication terminal accesses a communication network different from the first communication network N1. Furthermore, the SCP 40 also functions as terminal information storage means for storing a telephone number commonly used by the target terminal 20 both in the first communication network N1 and the second communication network N2 and the first mail address, in association with each other. An example of information stored in the SCP 40 is shown in Fig. 3. As shown in Fig. 3, in the SCP 40, with respect to the communication terminal that changes the accessed communication network from the first communication network N1 to the different network, the telephone number of the communication network, a mail address used in the first communication network N1 and information (communication network information) as to communication networks in which the communication terminal can be accessed to perform communication is stored therein, in association with each other. Although, in Fig. 3, as the communication network information, a name for specifying a communication network such as "second" is described , for example, a carrier number (NRN: network routing number) allocated to each communication carrier can also be used. The information described above is stored in the SCP 40, for example, by input of the information by the communication carrier when the user of the target terminal 20 performs the procedure of changing the communication carrier under contract. Information that is stored in the SCP 40 is supplied to the first e-mail control device 50 in accordance with the requirement from the first e-mail control device 50, which will be described later.

The first e-mail control device 50 will now be described. The first e-mail control device 50 is included in the first e-mail operation system 30, and is a device that operates e-mails transmitted and received by a communication terminal which accesses the first communication network N1 to perform communication. The first e-mail control device 50 may be included in the same device as a mail server that holds e-mails transmitted and received by the communication terminal which accesses the first communication network N1 to perform communication or may be provided independent of this mail server. In the following embodiment, a case where the first e-mail control device 50 functions as the mail server will be described. As shown in Fig. 1, the first e-mail control device 50 is configured so as to include an e-mail operation requirement reception portion 51, a target terminal information acquisition portion 52, an e-mail operation requirement transmission portion 53 and a history data base 54.

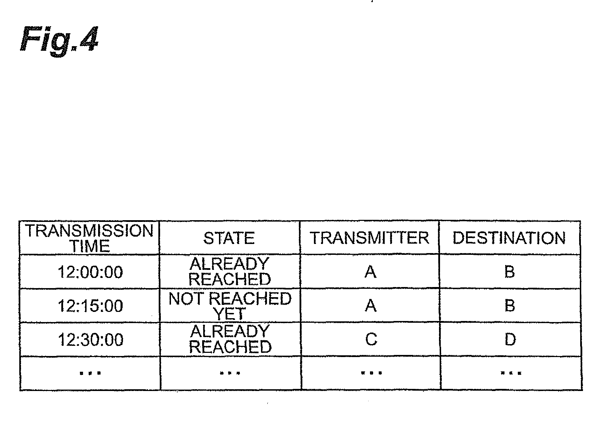

The history data base 54 will first be described. In the history data base 54, information as to e-mails transmitted to the first mail address is stored. An example of information stored in the history data base 54 is shown in Fig. 4. Although Fig. 4 shows an example where information as to e-mails transmitted to a plurality of communication terminals including the target terminal 20 is held all together, information for each communication terminal may be stored in a different table. As shown in Fig. 4, in the history data base 54, as the information for specifying e-mails, the dates and times when the e-mails are transmitted, the transmitters of the e-mails and the destinations of the e-mails are stored, in association with each other. As information for specifying the transmitters and the destinations of the e-mails, the mail addresses of the communication terminals are preferably used. Furthermore, in the example shown in Fig. 4, information as to whether or not the e-mail is distributed to the communication terminal of the destination is stored as a "state." Here, when the e-mail has been already distributed to the communication terminal of the destination and is considered to be held in the communication terminal, the "state" is set to "already reached" whereas when the e-mail has not been distributed, for example, because the communication terminal of the destination is out of the range, the "state" is set to "not reached yet." This information is updated each time processing related to the transmission and reception of an e-mail is performed in the mail server. As described above, the history data base 54 functions as history information storage means for storing information (the time of transmission, the transmitter and the destination) for specifying an e-mail transmitted to the first mail address and information (transmitter) for specifying the transmitter of the e-mail, in association with each other, and also functions as distribution information storage means for storing information for specifying the e-mail transmitted to the first mail address and information (state) for specifying whether or not the e-mail is distributed to the communication terminal, in association with each other. As described above, with respect to information that is stored in the history data base 54, the information for specifying the transmitter of the e-mail may be included in the information for specifying the e-mail. It should be noted that, in the history data base 54, an aspect is possible in which information related to the transmission of an e-mail is held only for a holding time (for example, three days) previously determined by, for example, a communication carrier or the user of a communication terminal, and the information after a lapse of the holding time is deleted. In this case, the amount of information held in the history data base 54 can be adjusted.

The e-mail operation requirement reception portion 51 will now be described. The e-mail operation requirement reception portion 51 functions as e-mail operation requirement reception means for receiving an e-mail operation requirement that is transmitted from the transmission terminal 10 and that includes the first mail address, information for specifying an e-mail, and information for specifying the transmitter (transmission terminal 10) of the e-mail operation requirement.

Here, when the e-mail operation requirement received in the e-mail operation requirement reception portion 51 is not a requirement that is transmitted to a communication terminal to which the communication terminal accessed by the MNP is changed, that is, when the e-mail operation requirement is the one for a communication terminal which accesses the first communication network N1, a mail box in the communication terminal included in the mail server included in the first e-mail control device 50 is referenced, processing related to the operation of an e-mail is performed and an operation instruction is provided to the communication terminal, with the result that the operation of the e-mail based on the e-mail operation requirement is performed. However, as in the target terminal 20 of the present embodiment, the mail box of a communication terminal to which an accessed communication network is changed and the use of the first mail address is stopped is deleted from the mail server. Therefore, the e-mail operation requirement reception portion 51 determines whether or not the mail box related to the first mail address is stored in the mail server, and, when the mail box is not stored, processing related to the operation of an e-mail, which will be described later, is performed.

Furthermore, the e-mail operation requirement reception portion 51 of the present embodiment has the following two functions. That is, the first function is that, based on information for specifying an e-mail included in the e-mail operation requirement and information for specifying the transmitter of the e-mail operation requirement, the history data base 54 is referenced, and whether or not the transmitter of the e-mail specified by the information for specifying the e-mail agrees with the communication terminal (in the present embodiment, the transmission terminal 10) that transmits the e-mail operation requirement is determined. Then, in this function, when the transmitter of the e-mail does not agree with the communication terminal (transmission terminal 10) that transmits the e-mail operation requirement, processing that is related to the subsequent operation of the e-mail is stopped. Furthermore, the second function is that, whether or not the e-mail is distributed (whether or not to perform the distribution) to the communication terminal (in the present embodiment, the target terminal 20) of the destination is determined, and, when the e-mail is not distributed to the communication terminal of the destination, processing that is related to the subsequent operation of the e-mail is stopped.

Specifically, for example, based on the information (the time of transmission, the transmitter, the destination and the like) for specifying the e-mail, the e-mail in which the transmission terminal 10 has transmitted the e-mail operation requirement with the reference to Fig. 4 is identified. Then, the "state" of the e-mail shown in Fig. 4 is changed to the "already reached", and, when the transmitter of the e-mail is the transmission terminal 10 that transmits the e-mail operation requirement, the e-mail operation requirement reception portion 51 continues to operate the subsequent processing whereas when the "state" of the e-mail is "not reached yet" or the transmitter of the e-mail is not the transmission terminal 10, the subsequent processing is stopped and the processing related to the e-mail operation requirement is completed. In this case, the function of providing a notification stating that the processing related to the operation of the e-mail is stopped to the transmission terminal 10 may be included, and furthermore, an aspect is also possible in which a message (for example, "The processing is stopped because it is not distributed.") including the reason why the processing is stopped is transmitted to the transmission terminal 10. In addition, as described above, with reference to the history data base 54, it is not mandatory to perform the processing for determining whether or not the processing (processing related to the e-mail operation requirement) related to the operation of the e-mail is continued, and an aspect is possible in which all the subsequent processing is performed when the e-mail operation requirement is received. Furthermore, only any one of the determination as to whether or not the transmitter of the e-mail agrees with the transmitter of the e-mail operation requirement and the determination as to whether or not the e-mail is distributed to the communication terminal of the destination can also be used as a criterion for determining whether or not to perform the subsequent processing.

As described above, the e-mail operation requirement which is received by the e-mail operation requirement reception portion 51 and for which the subsequent processing related to the operation of the e-mail is determined by referencing the history data base 54 to be performed is transmitted to the target terminal information acquisition portion 52.

Based on the first mail address included in the e-mail operation requirement transmitted by the e-mail operation requirement reception portion 51, the target terminal information acquisition portion 52 references the SCP 40 and functions as target terminal information acquisition means for acquiring the telephone number of the target terminal 20 that is stored in association with the first mail address. In the present embodiment, communication network information that is stored in association with the first mail address in the SCP 40 is also acquired together with the telephone number. The communication network acquired here is used, when a plurality of communication networks different from the first communication network N1 is present, to identify the communication network that is identified with the first mail address and that is accessed by the target terminal 20. The telephone number and the communication network of the target terminal 20 acquired by the target terminal information acquisition portion 52 and the e-mail operation requirement are transmitted to the e-mail operation requirement transmission portion 53. In addition, when the mail address that is included in the e-mail operation requirement and that is used to identify the terminal to be operated is different from a mail address which was used in the past, such as when it is a wrong mail address, since information that is stored in association with the mail address is not present, the mail address is determined to be wrong and the subsequent processing is stopped.

The e-mail operation requirement transmission portion 53 functions as e-mail operation requirement transmission means for transmitting an e-mail operation requirement including the telephone number of the target terminal 20 and information for identifying an e-mail to the second communication network. In the present embodiment, this operation requirement is transmitted to the second communication network N2 identified by the information that is acquired by the target terminal information acquisition portion 52 and that is used to identify the communication network.

Next, the second e-mail operation device 60 and the subscriber data base 70 will be described. The second e-mail operation device 60 is a device that operates e-mails transmitted and received by a communication terminal which accesses the second communication network N2 to perform communication. The second e-mail control device 60 may be included in the same device as the mail server that holds e-mails transmitted and received by the communication terminal which accesses the second communication network N1 to perform communication or may be provided independent of this mail server. For example, a GW (gateway) device or the like that connects the second communication network N2 to another communication network can also have the function related to the second e-mail operation device 60.

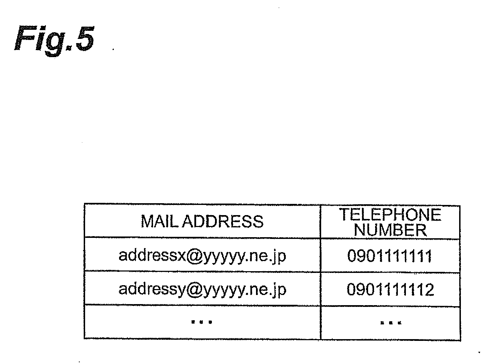

The subscriber data base 70 is a device that stores, by making a contract with the communication carrier supplying the second communication network N2, information related to the communication terminal that accesses the second communication network N2 to perform communication. Among information held in the subscriber data base 70, an example of information used in the communication system 1 of the present embodiment is shown in Fig. 5. Although, in the subscriber data base 70, for example, the telephone number of the communication terminal that accesses the second communication network N2 to perform communication, the mail address used when e-mails are transmitted and received through the second communication network N2, information as to whether to be within the range, contract information such as other services and the like are stored, as shown in Fig. 5, the communication system 1 of the present embodiment makes use of, among the above information, information in which the telephone number of the communication terminal is in association with the mail address. The information held in the subscriber data base 70 is updated by, for example, the communication carrier. It should be noted that, as will be described later, when the e-mail operation instruction can be transmitted without the use of the second mail address for the target terminal 20, the information held in the subscriber data base 70 is not used for the operation of the e-mail.

Next, the individual function portions of the second e-mail operation device 60 will be described in detail. As shown in Fig. 1, the second e-mail operation device 60 of the present embodiment is configured so as to include an operation requirement reception portion 61 and an operation instruction transmission portion 62.

The operation requirement reception portion 61 functions as operation requirement reception means for receiving an e-mail operation requirement transmitted from the first e-mail control device 50. As described above, the operation requirement transmitted from the first e-mail control device 50 includes the telephone number of the target terminal 20 and the information for identifying the e-mail. The operation requirement received by the operation requirement reception portion 61 is transmitted to the operation instruction transmission portion 62.

The operation instruction transmission portion 62 functions as operation instruction transmission means for transmitting, based on the operation requirement transmitted from the operation requirement reception portion 61, the operation instruction related to the e-mail identified from the information for identifying the e-mail to the target terminal 20. Specifically, based on the telephone number of the target terminal 20 included in the operation requirement transmitted form the first e-mail control device 50, the operation instruction transmission portion 62 makes an inquiry to the subscriber data base 70, thereby acquires the mail address (second mail address) of the target terminal 20 used in the second communication network N2 and uses this second mail address to transmit the operation instruction of the e-mail to the target terminal 20. It should be noted that, when it is possible to provide the e-mail operation instruction to the target terminal 20 by using only the telephone number of the target terminal 20, an aspect is possible in which the operation instruction is provided to the target terminal 20 without an inquiry as to the acquisition of the second mail address being made to the subscriber data base 70. The operation instruction transmission portion 62 provides the e-mail operation instruction to the target terminal 20, the target terminal 20 receives the operation instruction and performs processing according to the instruction, and thus the e-mail is operated.

As described above, the individual portions included in the e-mail operation system 2 are operated as described above, thus an instruction to operate the e-mail held in the target terminal 20 is provided through the second communication network N2 based on the operation requirement of the e-mail transmitted from the transmission terminal 10 to the first e-mail control device 50 included in the first communication network N1 and the target terminal 20 operates the e-mail. Although the above description deals with a case where the first e-mail control device 50 and the second e-mail operation device 60 have different functions, a device that has both functions of the first e-mail control device 50 and the second e-mail operation device 60 may be provided in each of the communication networks.

### (Method of operating an e-mail)

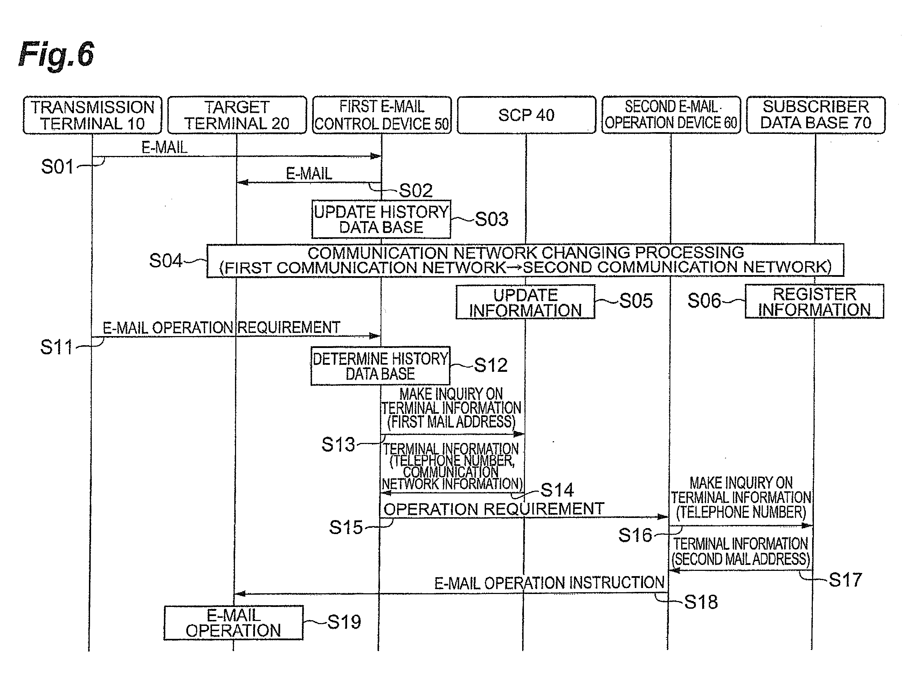

A method of operating an e-mail with the e-mail operation system 2 will now be described with reference to a sequence diagram shown in Fig. 6. With reference to the sequence diagram shown in Fig. 6, processing performed when an e-mail is transmitted from the transmission terminal 10 to the target terminal 20 that accesses the first communication network N1 will first be described. Then, processing performed when the e-mail operation requirement is transmitted from the transmission terminal 10 after the communication network accessed by the transmission terminal 10 is changed from the first communication network N1 to the second communication network N2 will be described.

The transmission terminal 10 first transmits the e-mail to the target terminal 20. Specifically, the transmission terminal 10 transmits the e-mail including information on the transmitter and the destination to the first e-mail control device 50 (S01). Here, the e-mail is transmitted from the transmission terminal 10 to the target terminal 20 that accesses the first communication network N1, using the first mail address. The first e-mail control device 50 transmits the e-mail to the target terminal 20 specified in the first mail address that is the destination of the e-mail (S02). Based on the processing related to the transmission of the e-mail, the history data base 54 of the first e-mail control device 50 is updated (S03). Specifically, information for specifying the e-mail including the date and time when the e-mail is transmitted from the transmission terminal 10, the mail address of the transmitter (transmission terminal 10) and the mail address of the destination (target terminal 20) and information related to the state of the e-mail when it is distributed are added to the table shown in Fig. 4. In the method of operating the e-mail, since the e-mail is transmitted to the target terminal 20 (S02), the state of the e-mail when it is distributed shown in the table is changed to "already reached."

Then, since the user of the target terminal 20 changes the communication carrier under contract through the MNP, processing for changing the communication network accessed by the target terminal 20 from the first communication network N1 to the second communication network N2 (S04). Since the communication network accessed by the target terminal 20 is changed, the first e-mail control device 50 stops the use of the first mail address. Information (for example, the mail box or the like that is held in the mail server and that is in association with the first mail address) obtained by removing the information related to the transmission and reception of e-mails held in the history data base 54 from the information related to the first mail address held in the first e-mail control device 50 is deleted from the first e-mail control device 50. On the other hand, the information held in the SCP 40 included in the first communication network N1 is updated (S05). Specifically, as shown in Fig. 3, as information on the communication terminal that changes the accessed communication network, a row in which the first mail address "address1@xxxxx.ne.jp" and the telephone number "09011111111" of the target terminal 20 are in association with the information ("second") indicating the communication network resulting from the change is added. On the other hand, in the subscriber data base 70 included in the second communication network N2, information related to the target terminal 20 with which to newly access the second communication network N2 to communicate is registered (S06). Specifically, as shown in Fig. 5, the telephone number "09011111111" of the target terminal 20 and the second mail address "addressx@yyyyy.ne.jp" of the target terminal 20 used when the target terminal 20 accesses the second communication network N2 are stored in association with each other.

Then, the transmission terminal 10 transmits an e-mail operation requirement to the first e-mail control device 50 (S11). Here, in the e-mail operation requirement, the target terminal 20 holding the e-mail to be operated is specified in the first mail address "address1@xxxxx.ne.jp." The e-mail operation requirement reception portion 51 of the first e-mail control device 50 receives this e-mail operation requirement (e-mail operation requirement reception step). Although, based on this e-mail operation requirement, the e-mail operation requirement reception portion 51 attempts to reference the mail box held in the mail server, since the mail box is deleted by the communication network change processing (S04) described above, the e-mail operation requirement reception portion 51 cannot reference the mail box. Therefore, in consideration of the possibility that the communication network accessed by the target terminal 20 is changed, the process proceeds to the subsequent processing.

Then, based on the information for specifying the e-mail included in the e-mail operation requirement and information on the transmitter of the e-mail operation requirement, the e-mail operation requirement reception portion 51 determines the history data base 54 (S12, e-mail operation requirement reception step). In the e-mail operation method of the present embodiment, since both the transmitter that transmits the e-mail and the transmitter of the e-mail operation requirement are the transmission terminal 10, and the target e-mail has already been transmitted (S02), the history data base 54 is determined, and consequently, the subsequent processing related to the operation of the e-mail is determined and the e-mail operation requirement is transmitted from the e-mail operation requirement reception portion 51 to the target terminal information acquisition portion 52.

The target terminal information acquisition portion 52 uses the first mail address included in the e-mail operation requirement transmitted from the e-mail operation requirement reception portion 51 to make an inquiry to the SCP 40 about information on the communication terminal (S13, accessed network specification step). On the other hand, the telephone number "09011111111", which is stored in association with the mail address "address1@xxxxx.ne.jp", and the communication network information "second" are acquired from the information held in the SCP 40 (S14, accessed network specification step). As described above, the telephone number of the target terminal 20 acquired from the target terminal information acquisition portion 52 and the communication network information on the accessed network are transmitted together with the e-mail operation requirement from the target terminal information acquisition portion 52 to the e-mail operation requirement transmission portion 53. Based on the information transmitted from the target terminal information acquisition portion 52, the e-mail operation requirement transmission portion 53 transmits the e-mail operation requirement to the second communication network N2 (S15, e-mail operation requirement transmission step).

On the other hand, the operation requirement reception portion 61 of the second e-mail operation device 60 included in the second communication network N2 receives the e-mail operation requirement transmitted from the first e-mail control device 50 (operation requirement reception step). The operation requirement received by the operation requirement reception portion 61 is transmitted from the operation requirement reception portion 61 to the operation instruction transmission portion 62. Based on the telephone number "09011111111" of the target terminal 20 included in the operation requirement, the operation instruction transmission portion 62 makes an inquiry to the subscriber data base 70 about information on the target terminal 20 (S16, operation instruction transmission step). Then, the second mail address "addressx@yyyyy.ne.jp" of the target terminal 20, which is stored in association with the telephone number in the subscriber data base 70, is acquired by the operation instruction transmission portion 62 (S 17, operation instruction transmission step). The operation instruction transmission portion 62 uses the second mail address to transmit an e-mail operation instruction to the target terminal 20 (S 18, operation instruction transmission step). This operation instruction is received by the target terminal 20, and the e-mail held in the target terminal 20 is operated based on the operation instruction (S 19). Furthermore, when this processing on the e-mail is performed, and the target terminal 20 has the function of notifying the user of the target terminal 20 of the fact that this operation has been performed, the target terminal 20 notifies the user of the fact that the processing has been performed such as by a method in which the fact is displayed on a screen, with the result that a series of processing steps related to the operation of the e-mail is completed.

### (E-mail operation system 2 and effects by e-mail operation method)

The e-mail operation system 2 of the present embodiment described above and effects of the e-mail operation system 2 by the e-mail operation method will be described.

According to the e-mail operation system 2 of the present embodiment and the e-mail operation method, the e-mail operation requirement that is transmitted from the transmission terminal 10 and that has the first mail address as the destination is received in the first e-mail control device 50 included in the first communication network N1. Then, the first e-mail operation system 30 that is configured to include the first e-mail control device 50 and the SCP 40 specifies the telephone number of the target terminal 20 which is in association with the first mail address, and the first e-mail control device 50 uses this telephone number to transmit the e-mail operation requirement held in the target terminal 20 to the second communication network N2. Then, the second e-mail operation device 60 included in the second communication network N2 uses the telephone number of the target terminal 20 included in the operation requirement to transmit the e-mail operation instruction to the target terminal 20. In this way, it is possible to provide the e-mail operation instruction, through the second communication network N2 different from the first communication network N1, to the target terminal 20 in which the communication carrier is changed through, for example, the number portability.

Furthermore, in the present embodiment, in the history data base 54 of the first e-mail control device 50, the information for specifying the transmitter of the e-mail is stored in association with other information for specifying the e-mail, and the e-mail operation requirement reception portion 51 determines whether or not the transmitter of the received e-mail operation requirement agrees with the transmitter of the e-mail. When they do not agree with each other, the processing related to the e-mail operation requirement is stopped. In this way, for example, when the e-mail operation requirement is transmitted from a third party different from the transmitter of the e-mail, it is possible to prevent the e-mail from being operated based on the e-mail operation requirement.

Furthermore, in the present embodiment, distribution information on e-mails is stored in the history data base 54, and the e-mail operation requirement reception portion 51 determines, by referencing the history data base 54, whether or not the e-mail has already been distributed. When the e-mail has not been distributed, the processing related to the e-mail operation requirement is stopped. In this way, it is possible to perform the e-mail operation on the target terminal 20 to which the e-mail has not been distributed without the e-mail operation requirement being transmitted so as to reduce the amount of communication between the first e-mail control device 50 and the second e-mail operation device 60 and between the second e-mail operation device 60 and the target terminal 20.

Although, in the present embodiment, the e-mail operation requirement reception portion 51 determines, by referencing the history data base 54, whether or not the subsequent processing related to the operation of the e-mail is performed, even if the history data base 54 is not held as described above, the effect of the present invention is provided in which it is possible to provide the e-mail operation instruction through the second communication network N2 different from the first communication network N1.

### (Variations of the embodiment)

The e-mail operation system 2 of the present invention and the e-mail operation method by using the e-mail operation system 2 are not limited to the embodiment described above; various embodiments are possible. Various variations of the e-mail operation system 2 of the present invention will be described below.

Although the above embodiment deals with a case where the communication carrier with which the user of the target terminal 20 contracts is changed through the MNP and the communication network accessed by the target terminal 20 is changed from the first communication network N1 to the second communication network N2 without the telephone number being changed, the present invention is not limited to this case. The present invention can be applied to other cases.

Although, in the above embodiment, the first e-mail operation system 30 is configured to include the SCP 40 and the first e-mail control device 50, these functions may be incorporated into one device. The functions of the SCP 40 and the first e-mail control device 50 in the above embodiment may be incorporated into the SCP 40 and the first e-mail control device 50 in a dispersed manner. For example, although, in the above embodiment, the first mail address, the telephone number of the target terminal 20, and the information on the communication network are stored in the SCP 40, in association with each other, an aspect is possible in which the first mail address and the telephone number of the target terminal 20 are stored in the first e-mail control device 50.

Although the above embodiment deals with a case where the telephone number is used as the target terminal information both in the first communication network N1 and the second communication network N2 so as to specify the target terminal 20, when an identification number or the like of the communication terminal is used as information different from the telephone number both in the first communication network N1 and the second communication network N2, such information can also be used.

Although, in the above embodiment, the information on the communication network is stored in association with the first mail address and the telephone number of the target terminal 20 in the SCP 40, when only the first communication network N1 and the second communication network N2 are present as communication networks, the information on the communication network is not mandatory. In other words, since the first mail address and the telephone number of the target terminal 20 are stored in the SCP 40 and the accessed communication network can be determined to be changed to the second communication network N2 different from the first communication network N1, it is possible to transmit the e-mail operation requirement to the second communication network N2 and perform the subsequent processing.

Various modifications can be made to the processing performed by each device in the above embodiment. For example, the first e-mail control device 50 holds information (for example, a list or the like of mail addresses that are stopped being used through the MNP) for specifying the communication terminal that changes the accessed communication network from the first communication network N1 to a different communication network. Then, the e-mail operation requirement transmitted from the transmission terminal 10 is received (S11 of Fig. 6), it is determined that no mail box related to the first mail address is present, thereafter the above information is referenced and it is determined whether or not the target terminal 20 specified in the first mail address changes the accessed communication network through the MNP. Then, when it is determined that the target terminal 20 changes the accessed communication network through the MNP, processing for referencing the SCP 40 is performed, and thus it is possible to reduce the amount of communication performed between the first e-mail control device 50 and the SCP 40.

It is possible that, in changing processing (S04 of Fig. 6) performed when the target terminal 20 changes the accessed communication network from the first communication network N1 to the second communication network N2, for example, an e-mail held in the mail box related to the first mail address of the mail server of the first communication network N1 is transferred to a mail box related to the second mail address that is newly provided in the mail server of the second communication network N2. In this case, when the second e-mail operation device 60 transmits an e-mail operation instruction (S 18 of Fig. 6) to the target terminal 20, an aspect may be possible in which the same instruction as the above instruction is transmitted to the mail server of the second communication network N2. Thus, an e-mail operation instruction is also transmitted to the mail box related to the second mail address of the second communication network N2, processing related to the operation of the e-mail is performed and it is possible to record the history on the transmission of the e-mail operation instruction to the target terminal 20.

The above embodiment deals with a case where whether or not the transmitter of the e-mail agrees with the transmitter of the e-mail operation requirement is determined by checking whether or not their mail addresses agree with each other, and, if they agree with each other, the subsequent processing can be performed. However, in consideration of a case where an e-mail operation requirement is transmitted from a third party using a counterfeit mail address, for example, an ID or a password can also be used in order to check the transmitter of the e-mail operation requirement.

Although, in the above embodiment, when the second e-mail operation device 60 receives the operation requirement from the first e-mail control device 50, the second e-mail operation device 60 performs processing according to this operation requirement, the user of the target terminal 20 may determine whether or not the processing for the operation requirement is performed. In this case, the second e-mail operation device 60 makes an inquiry to the user of the target terminal 20 as to whether the processing may be performed according to the operation requirement each time the operation requirement is received, and thus the intension of the user of the target terminal 20 is checked. Information reflecting the intension of the user of the target terminal 20 as to whether or not a response is made to this operation requirement is previously stored as setting data in the second e-mail operation device 60, and, when the operation requirement from the first e-mail control device 50 is received, control can be performed based on this information. This setting data may be produced by making an inquiry to the user of the target terminal 20 and thereby checking the intension of the user of the target terminal 20. Furthermore, processing may be added in which, when the user of the target terminal 20 desires to stop the processing for the operation requirement, the processing is stopped and a notification is provided to the transmission terminal 10. Moreover, whether or not the second e-mail operation device 60 performs the processing based on the operation requirement from the first e-mail control device 50 can be specified by the network policy of the second communication network N2. In other words, when the network policy specifies that the processing is not performed based on the operation requirement from the first e-mail control device 50, it can be determined that the processing corresponding to the operation requirement from the first e-mail control device 50 is not performed.

The above embodiment can also be applied to a case where an e-mail (S01) is transmitted from the transmission terminal 10 to, for example, a post address of a mailing list, and an e-mail operation requirement is transmitted from the transmission terminal 10 to the post address of the mailing list. Specifically, for example, when the first e-mail control device 50 receives the e-mail operation requirement that specifies, as the destination, the post address of the mailing list from the transmission terminal 10, the first e-mail control device 50 determines whether or not the e-mail operation requirement is an operation requirement for an e-mail that is posted to the mailing list. Then, when it is determined to be the e-mail operation requirement for the e-mail that is posted to the mailing list, an inquiry is made to a management server or the like that manages this mailing list, and thus mailing list participants (destinations to which the e-mail is distributed) on which the operation of the e-mail is performed are specified. Then, the e-mail operation processing is performed on each of communication terminals (target terminals) that are the destinations which are specified by the above processing and to which the e-mail is distributed. Here, when the target terminal included in the mailing list changes the accessed communication network, the same processing as in the above embodiment is performed, and thus it is possible to operate the e-mail transmitted using the mailing list.

The above embodiment can also be applied to a case where the target terminal 20 is in the process of performing roaming. Specifically, when the target terminal 20 is in the process of performing roaming, the information thereof is held in, for example, the second e-mail operation device 60, an e-mail operation instruction is transmitted, based on the information, to the communication network to which the roaming is performed and thus it is possible to operate the e-mail held in the target terminal 20.

Although the above embodiment deals with a case where the e-mail is handled even after the change of the communication network accessed by the target terminal 20, it is possible that the e-mail cannot be transmitted and receive through the second communication network N2 depending on the details of a contract with the communication carrier supplying the second communication network N2. In this case, the second e-mail operation device 60 uses information (for example, a short message service) or the like in which transmission to the target terminal 20 can be performed by specifying its telephone number, and thereby can also transmit an instruction related to the operation of the e-mail.

Although, in the above embodiment, the processing for transmitting the e-mail operation instruction to the target terminal 20 in the second e-mail operation device 60 is described, the fact that the operation of the e-mail is appropriately performed in the target terminal 20 based on the operation instruction may be notified to the transmission terminal 10. In this case, in the order opposite to the order in which the e-mail operation requirement, the operation instruction and the e-mail operation instruction are transmitted, the target terminal 20 notifies the second e-mail operation device 60 of the operation result of the e-mail, and thus it is possible to notify the transmission terminal 10 of the operation result as the response to the e-mail operation requirement through the first e-mail control device 50. In this case, for example, when the e-mail has already been deleted from the target terminal 20 by the operation of the user or the like, its result may be notified.

### Industrial Applicability

According to the present invention, there are provided an e-mail operation system, an e-mail operation device and an e-mail operation method that can perform an operation of an e-mail on a communication terminal in which a communication carrier under contract has been changed using, for example, number portability.

### Reference Signs List

1: Communication system, 2: E-mail operation system, 10: Transmission terminal, 20: Target terminal, 30: First e-mail operation system, 40: SCP, 50: First e-mail control device, 60: Second e-mail operation device, 70: Subscriber data base

## Claims

1. An e-mail operation system including:
a first e-mail operation device that is included in a first communication network and that operates an e-mail exchanged with a communication terminal which accesses the first communication network to perform communication; and
a second e-mail operation device that is included in a second communication network different from the first communication network and that operates an e-mail exchanged with a communication terminal which accesses the second communication network to perform communication,
in which the e-mail operation system operates, on a target terminal that is a communication terminal on which the operation is performed, through the second communication network, an e-mail transmitted using a first mail address used when the target terminal accesses the first communication network to exchange an e-mail,
wherein the first e-mail operation device comprises:
terminal information storage means for storing the target terminal information used commonly in the first communication network and in the second communication network in order to specify the target terminal and the first mail address, in association with each other;
e-mail operation requirement reception means for receiving an e-mail operation requirement including the first mail address and information for specifying the e-mail;
target terminal information acquisition means for referencing the terminal information storage means based on the first mail address included in the e-mail operation requirement received by the operation requirement reception means and for acquiring the target terminal information that is stored in association with the first mail address; and
e-mail operation requirement transmission means for transmitting, to the second communication network, the e-mail operation requirement including the target terminal information and the information for specifying the e-mail, and
the second e-mail operation device comprises:
operation requirement reception means for receiving the operation requirement transmitted from the first e-mail operation device; and
operation instruction transmission means for transmitting an e-mail operation instruction to operate an e-mail specified by the information for specifying the e-mail to the target terminal that is specified by the target terminal information included in the operation requirement transmitted by the operation requirement reception means.

2. The e-mail operation system of claim 1,
wherein the second communication network is composed of a plurality of communication networks,
the terminal information storage means stores communication network information that is information for specifying a network accessed by the target terminal among the communication networks further and the first mail address, in association with each other,
the target terminal information acquisition means references the terminal information storage means and acquires the target terminal information that is stored in association with the first mail address and the communication network information, and
the e-mail operation requirement transmission means transmits the e-mail operation requirement including the target terminal information and the information for specifying the e-mail to the communication network specified by the communication network information among the communication networks included in the second communication network.

3. The e-mail operation system of claim 1 or 2,
wherein the first e-mail operation device further comprises:
history information storage means for storing the information for specifying the e-mail transmitted to the first mail address and information for specifying a transmitter of the e-mail, in association with each other, and
the e-mail operation requirement reception means receives the e-mail operation requirement including the first mail address, the information for specifying the e-mail and the information for specifying a transmitter of the e-mail operation requirement, references the history information storage means based on the information for specifying the e-mail, determines whether or not the transmitter of the e-mail agrees with the transmitter of the e-mail operation requirement and stops processing related to the e-mail operation requirement when the transmitter of the e-mail does not agree with the transmitter of the e-mail operation requirement.

4. The e-mail operation system of any one of claims 1 to 3,
wherein the first e-mail operation device further comprises:
distribution information storage means for storing the information for specifying the e-mail transmitted to the first mail address and information for specifying whether or not the e-mail is distributed to the communication terminal, in association with each other, and
the e-mail operation requirement reception means references the distribution information storage means based on the information for specifying the e-mail, determines whether or not the e-mail is distributed to the target terminal and stops the processing related to the e-mail operation requirement when the e-mail is not distributed to the target terminal.

5. An e-mail operation device that is a first e-mail operation device included in an e-mail operation system including: a first e-mail operation device that is included in a first communication network and that operates an e-mail exchanged with a communication terminal which accesses the first communication network to perform communication; and a second e-mail operation device that is included in a second communication network different from the first communication network and that operates an e-mail exchanged with a communication terminal which accesses the second communication network to perform communication, in which the e-mail operation system operates, on a target terminal that is a communication terminal on which the operation is performed, through the second communication network, an e-mail transmitted using a first mail address used when the target terminal accesses the first communication network to exchange an e-mail,
wherein the first e-mail operation device comprises:
terminal information storage means for storing the target terminal information used commonly in the first communication network and in the second communication network in order to specify the target terminal and the first mail address, in association with each other;
e-mail operation requirement reception means for receiving the e-mail operation requirement including the first mail address and information for specifying the e-mail;
target terminal information acquisition means for referencing the terminal information storage means based on the first mail address included in the e-mail operation requirement received by the operation requirement reception means and for acquiring the target terminal information that is stored in association with the first mail address; and
e-mail operation requirement transmission means for transmitting, to the second communication network, the e-mail operation requirement including the target terminal information and the information for specifying the e-mail.

6. An e-mail operation device that is a second e-mail operation device included in an e-mail operation system including: a first e-mail operation device that is included in a first communication network and that operates an e-mail exchanged with a communication terminal which accesses the first communication network to perform communication; and a second e-mail operation device that is included in a second communication network different from the first communication network and that operates an e-mail exchanged with a communication terminal which accesses the second communication network to perform communication, in which the e-mail operation system operates, on a target terminal that is a communication terminal on which the operation is performed, through the second communication network, an e-mail transmitted using a first mail address used when the target terminal accesses the first communication network to exchange an e-mail,
wherein the second e-mail operation device comprises:
operation requirement reception means for receiving the operation requirement including the target terminal information for specifying the target terminal which is transmitted from the first e-mail operation device and which is used commonly in the first communication network and in the second communication network, and the information for specifying the e-mail; and
operation instruction transmission means for transmitting an e-mail operation instruction to operate an e-mail specified by the information for specifying the e-mail to the target terminal that is specified by the target terminal information included in the operation requirement transmitted by the operation requirement reception means.

7. An e-mail operation method using an e-mail operation system including:
a first e-mail operation device that is included in a first communication network and that operates an e-mail exchanged with a communication terminal which accesses the first communication network to perform communication; and
a second e-mail operation device that is included in a second communication network different from the first communication network and that operates an e-mail exchanged with a communication terminal which accesses the second communication network to perform communication,
in which the e-mail operation system operates, on a target terminal that is a communication terminal on which the operation is performed, through the second communication network, an e-mail transmitted using a first mail address used when the target terminal accesses the first communication network to exchange an e-mail,
the e-mail operation method comprising:
a terminal information storage step of storing, in the first e-mail operation device, the target terminal information used commonly in the first communication network and in the second communication network in order to specify the target terminal and the first mail address, in association with each other;
an e-mail operation requirement reception step of receiving, in the first e-mail operation device, the e-mail operation requirement including the first mail address and information for specifying the e-mail;
a target terminal information acquisition step of referencing, in the first e-mail operation device, the terminal information storage means based on the first mail address included in the e-mail operation requirement received in the operation requirement reception step and of acquiring the target terminal information that is stored in association with the first mail address;
an e-mail operation requirement transmission step of transmitting, in the first e-mail operation device, to the second communication network, the e-mail operation requirement including the target terminal information and the information for specifying the e-mail,
an operation requirement reception step of receiving, in the second e-mail operation device, the operation requirement transmitted from the first e-mail operation device; and
an operation instruction transmission step of transmitting, in the second e-mail operation device, an e-mail operation instruction to operate an e-mail specified by the information for specifying the e-mail, to the target terminal that is specified by the target terminal information included in the operation requirement transmitted in the operation requirement reception step.

8. An e-mail operation method using a first e-mail operation device included in an e-mail operation system including:
a first e-mail operation device that is included in a first communication network and that operates an e-mail exchanged with a communication terminal which accesses the first communication network to perform communication; and
a second e-mail operation device that is included in a second communication network different from the first communication network and that operates an e-mail exchanged with a communication terminal which accesses the second communication network to perform communication,
in which the e-mail operation system operates, on a target terminal that is a communication terminal on which the operation is performed, through the second communication network, an e-mail transmitted using a first mail address used when the target terminal accesses the first communication network to exchange an e-mail,
the e-mail operation method comprising:
a terminal information storage step of storing the target terminal information used commonly in the first communication network and in the second communication network in order to specify the target terminal and the first mail address, in association with each other;
an e-mail operation requirement reception step of receiving the e-mail operation requirement including the first mail address and information for specifying the e-mail;
a target terminal information acquisition step of referencing the terminal information storage means based on the first mail address included in the e-mail operation requirement received by the operation requirement reception means and of acquiring the target terminal information that is stored in association with the first mail address; and
an e-mail operation requirement transmission step of transmitting to the second communication network, the e-mail operation requirement including the target terminal information and the information for specifying the e-mail.

9. An e-mail operation method using a second e-mail operation device included in an e-mail operation system including:
a first e-mail operation device that is included in a first communication network and that operates an e-mail exchanged with a communication terminal which accesses the first communication network to perform communication; and
a second e-mail operation device that is included in a second communication network different from the first communication network and that operates an e-mail exchanged with a communication terminal which accesses the second communication network to perform communication,
in which the e-mail operation system operates, on a target terminal that is a communication terminal on which the operation is performed, through the second communication network, an e-mail transmitted using a first mail address used when the target terminal accesses the first communication network to exchange an e-mail,
the e-mail operation method comprising:
an operation requirement reception step of receiving the operation requirement transmitted from the first e-mail operation device; and
an operation instruction transmission step of transmitting an e-mail operation instruction to operate an e-mail specified by the information for specifying the e-mail to the target terminal that is specified by the target terminal information included in the operation requirement transmitted by the operation requirement reception means.
